(19) **Europäisches Patentamt**
**European Patent Office**
**Office européen des brevets**

(11) **EP 0 414 890 B1**

(12) **EUROPEAN PATENT SPECIFICATION**

(45) Date of publication and mention
of the grant of the patent:
**21.01.1998 Bulletin 1998/04**

(21) Application number: **87907815.2**

(22) Date of filing: **25.11.1987**

(51) Int Cl.[6]: **G02C 7/06**

(86) International application number:
**PCT/JP87/00911**

(87) International publication number:
**WO 89/04987 (01.06.1989 Gazette 1989/12)**

(54) **MULTI-FOCAL LENS EQUIPPED WITH PROGRESSIVE POWER SEGMENT**

MULTIFOKALE LINSE MIT EINEM SEGMENT MIT PROGRESSIVER WIRKUNG

LENTILLE MULTIFOCALE POURVUE D'UN SEGMENT DE PUISSANCE PROGRESSIVE

(84) Designated Contracting States:
**AT BE CH DE FR GB IT LI LU NL SE**

(43) Date of publication of application:
**06.03.1991 Bulletin 1991/10**

(73) Proprietor: **OKANO, Hitoshi**
**Tokyo 168 (JP)**

(72) Inventor: **OKANO, Hitoshi**
**Tokyo 168 (JP)**

(74) Representative: **Senior, Alan Murray et al**
**J.A. KEMP & CO.,**
**14 South Square,**
**Gray's Inn**
**London WC1R 5LX (GB)**

(56) References cited:
**JP-A-54 104 854**          **JP-A-57 049 914**
**JP-A-62 183 424**          **JP-U-57 180 318**
**JP-U-61 027 115**

## Description

The present invention relates to a novel multifocal lens provided with a clearly sectioned progressive focal segment, which is a midway and a combination of a conventional multifocal lens and a progressive focal lens.

When a person get in middle age, the accommodation power of the ocular lens becomes weak, so that it becomes difficult for the person to adjust the focus sharply in near vision though the person may see well in far vision. This is an unavoidable phenomenon caused by aging, the phenomenon being called presbyopia. A traditional measure to counter presbyopia is to use a multifocal lens having two or more different visual field portions corresponding to different visual distances. Of the different visual field portions, an auxiliary visual field portion is called "a segment". A great deal of effort on development have been exerted for a long time into a segment constituted by an unifocal area having low astigmatism and moderate addition.

A multifocal lens is configured so that the function thereof is shared by clearly dividing the visual field portion into a main lens of far vision and a segment of near vision corresponding to different visual distances. A multifocal lens has a history of about 230 years since about 1730. Although there are many techniques of adding a segment, in most cases, a segment is constituted by several unifocal areas giving suitable positions, widths and additions. The efforts on development have been exerted on an improvement in spherical accuracy with reduced aberration. In any case, such a conventional technique belongs to an art having an object different from that of the present invention.

On the other hand, there exists a progressive focal lens. A first feature of and an object of development of such a progressive focal lens are in that the lens has no boundary between a far vision field and a near vision field so that the lens does not look like a multifocal lens in appearance. This point is picked up commercially as a first trade value. A second feature is in that there is no jump due to a sudden image change between the far vision field and the near vision field and between the near vision field and the side vision field, compared with the case of a unifocal segment-provided multifocal lens. However, the defect of the progressive focal lens is in that the low-aberration visual field is just one small part of the lens. If the lens is designed placing great importance on the optical characteristic in the vicinity of the progressive curve thereof, astigmatism and distortion increasing corresponding to the distance from the progressive curve occur necessarily in the opposite sides thereof. To obtain a wide effective vision field, the aberration must be dispersed over the whole lens. Progressive focal lens have a history of about 80 years.

A technique in which a segment portion is provided in a part of a progressive focal lens is disclosed in Japanese Patent Unexamined Publication Nos. 62-150215 and 62-183424. In either case, the disclosed technique is directed to improve the aforementioned peripheral vision field of a progressive focal lens and belongs to an art different in object from the present invention.

On the other hand, there is a multifocal lens using a technique in which the refractive index of a material is made to progressive partially. In the multifocal lens, however, there is no freedom to apply an ideal optical design thereon, because of the narrowness of the progressive focal area and the monotonousness of the progressive distribution. Accordingly, use of the technique in practice is attended with difficulties.

Those multiple lenses belong to a technique having means different from those of the present invention and in each of those multiple focal lenses no progressive focal area is provided in its segment portion.

EP-A-0225034 (an equivalent to JP-A-62 183 424) and WO-A-86/01309 disclose a multifocal lens having an upper distance vision zone divided by a visible division having an abrupt change in dioptric power from an intermediate vision zone of progressive dioptric power leading to a near vision zone. The near and intermediate vision zone may be incorporated into a visible segment the upper boundary of which forms the said visible division.

According to the present invention there is provided a multifocal lens having a main unifocal portion and a clearly sectioned segment for additional surface refracting power, wherein the segment has a unifocal are and a low-astigmatism progressive focal area, which areas are continuous to avoid a sudden image change, progressive focus is provided only in said progressive focal area of said segment, a main lens forms said main unifocal portion which is of far vision power, a lower portion of the segment forms said unifocal area which is of near vision power, and a second portion of said segment above said lower portion forms said progressive focal area, characterised in that an upper portion of said segment above said second portion forms a second unifocal area of said segment which is of intermediate vision power, and refracting power in said progressive focal area progresses from intermediate vision refracting power to near vision refracting power.

According to the invention there is also provided a plurality of segments according to claim 9.

It is intended that, changing conception apart from ready-made ideas, a main lens portion is left as it is as a unifocal area, and a segment having a limited size is used, while conversely utilizing the feature that the segment is small, to thereby extremely enlarge the optical capacity by application of a progressive focal function to the segment.

With a lens according to the present invention the following advantages may be obtained.

a. A low-astigmatism portion in a progressive focal area is used.
Only a portion near a progressive curve, where astigmatism necessarily produced in a progressive focal area is minimized, is used limitatively within a segment, to thereby remove a harmful portion. Because progression in the progressive focal area is carried out along one progressive curve, larger astigmatism is generated as an optical character, as a position comes far from the progressive curve toward the sides. Removing the optically harmful portion improves the optical characteristic as spectacles greatly, and therefore how to remove the optically harmful portion is a more important problem than any other problem as to how to additionally provide any other function.

b. A visual field having no distortion and no swinging is enlarged over the whole area.

Image distortion in the side visual field and the defect in undulating or swinging feeling of the lateral movement of the visual point occur necessarily in the progressive focal area. A user may suffer from nausea as if he got seasick, before the gets used to the defect.

With the present invention a portion in which a defect is little,so as not to exert any influence on the visual field in the vicinity of the progressive curve, is used in the segment, while a unifocal area of a main lens outside the segment is used with respect to the side visual field in which swinging will be felt, to thereby obtain a stable visual field without any distortion and swinging which have not been avoided in a conventional multifocal lens.

c. The progressive focal area is designed idealistically and freely.

To obtain a large degree of progression in a short progressive distance or to obtain smoothness to avoid a sudden image change when the visual point is shifted from the unifocal area to the progressive focal area, it is necessary to design the degree of progression so as to strengthen or weaken it freely without limitation of the sides. Further, in order to improve the optical characteristic by reducing astigmatism, distortion and the like, it is necessary to provide progressing in the directions other than the direction of the progressive curve so that the progressive focal area is designed as a complicated nonsphere. To pursue these ideals, it is necessary to remove a harmful portion which is produced necessarily in an extension surface and which becomes large as the position comes far from the progressive curve to the sides. The present invention may make it possible to design an ideal surface freely within the segment by cutting off continuity at the boundary line of the segment so that the progressive focal surface to be used is limited to a low-astigmatism portion near the progressive curve.

d. A visual field having a non-stepwise continuous range of visual distance is obtained.

With the present invention, a progressive focal area between a far visual point and a near visual point in a progressive focal lens may be provided in a known segment to thereby obtain clear vision non-stepwise and corresponding to the wide visual distance range to thereby improve the capacity in visual field of the segment greatly.

e. Jump is minimized at the upper portion of the segment.

With the present invention, one may minimize the jump at the upper portion of the segment. In general, when the light of sight is shifted into the segment from far vision toward near vision, an image is floated to jump up suddenly at the boundary line of the segment. This is because a base down prism is added when the line of sight passes through the boundary line. As the degree of addition increases, that is, as the segment center is apart from the optical center of far vision, the jump becomes larger, so that a dead angle where the image becomes invisible occurs on a part of the boundary line. To remove this, it is necessary to add a moderate base up prism to the segment.

f. Left and right prisms are equilibrated in the vertical direction of near vision.

In general, spectacles are adjusted by reference to the optical centers of far vision of left and right lenses. It is however general that the left and right lenses are different from each other in the degrees of refracting power. A multifocal lens has a near vision unifocal area in a position apart from the optical center of far vision. As the result, the prism refracting power in the vertical direction of near vision is different with respect to left and right eyes. As the difference increases, fatigue occurs more easily, and if the difference exceeds a limit in which an image blending function can be carried out, a double image is produced to show symptoms of diplopia. To remove the difference, slab-off treatment is applied to one lens to equlibrate left and right lenses. This requires special order by a skillful technique, so that the cost increases. Further, it is undesirable in appearance to form slab-off treated lines laterally only on the one lens.

With the present invention, a series of prism segments is prepared step-wise in advance as half-finished articles by adding prisms to segments so that an optimum prism segment can be easily selected for use in accordance with a prescription.

g. The weight of a convex lens is reduced.

In a convex lens, the prism required for progression in a conventional progressive focal lens or for slab-off treatment is applied to the full lens width. Accordingly, the total thickness of the convex lens is necessarily increased to thereby increase the weight of the convex lens. With the present invention, the increase of the prism thickness may be limited only to a segment used for near vision to thereby reduce the weight of the convex lens remarkably.

h. A synthetic optical center is given also to the near vision sphere.

The term "synthetic optical center" is defined as an optical center in which a value of 0 is given by combining the prism of the segment and the prism of the main lens. In such a synthetic optical center, a matter can be seen in a correct direction. In the case of conventional various multifocal lenses, when an optical center is given to the far vision sphere, it is very difficult to give a synthetic optical center to the near vision sphere. With the present invention, an optimum prism segment may be easily selected according to a prescription from the series of prism segments prepared as described above to thereby give a synthetic optical center to the near vision sphere.

In order that the invention may be better understood, the following description is given, merely by way of example, with reference to the accompanying drawings, in which:

Fig. 1 is a front view showing Lens A which is not an embodiment of the present invention, but is useful for understanding it;

Fig. 2 is a perspective view of the segment in Lens A;

Fig. 3 is a sectional view for explaining a curvature center at minimum jump in case where the segment in Lens A is provided in a projecting manner;

Fig. 4 is a sectional view for explaining a curvature center at a minimum segment level difference in the case where the segment in Lens A is provided in a projecting manner;

Fig. 5 is a front view showing Embodiment B;

Fig. 6 is a perspective view of the segment in Embodiment B;

Fig. 7 is a sectional view for explaining a curvature center at minimum jump in the case where the segment in Embodiment B is provided in a projecting manner;

Fig. 8 is a sectional view for explaining a curvature center at a minimum segment level difference in the case where the segment in Embodiment B is provided in a projecting manner;

Fig. 9 is a view for explaining a logarithmic spiral as a progressive curve;

Fig. 10 is a view for explaining a segment carrier for a segment mould;

Fig. 11 is a sectional view of a plastic cast mould;

Fig. 12 is a view from explaining a segment carrier for a fusion segment; and

Fig. 13 is a sectional view in the case where the segment is embedded.

1 ... main lens, 2 ...segment, F ... far vision sphere, I ... intermediate vision sphere, P ... progressive focal area, M ... marginal surface, N ... near vision 1 ... sphere, S ... progressive curve.

As a method for giving refracting power to a segment, there is a method of partially changing the refracting power of a material. In order to adjust fine refractive power, however, a method of changing surface refracting power is used in the present invention.

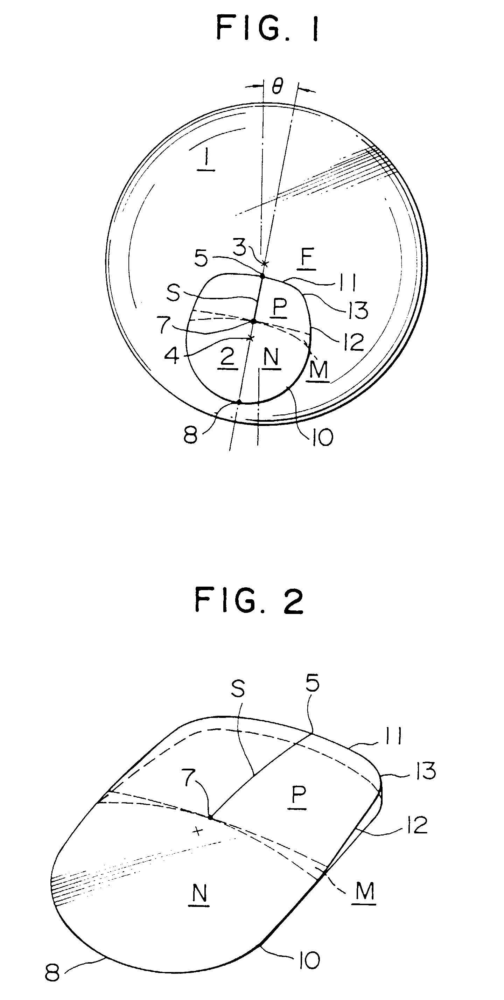

Lens A which is not an embodiment of the present invention, but is useful for understanding it will be described with reference to Figs. 1 and 2. A main lens 1 has a far vision sphere F containing an optical center 3 of far vision. A lower portion of a segment 2 having a clearly sectioned boundary line forms a sphere N having refracting power used for near vision. A sphere shape center 4 of near vision exists in the near vision sphere N. An upper portion of the segment forms a low-astigmatism progressive refracting power area P for progressing from the surface refracting power of the far vision sphere to the surface refracting power of the near vision sphere along a progressive curve S which leads from an upper edge center 5 to an upper edge center 7 of the near vision sphere N along a line from the far vision sphere to the near vision sphere.

A smooth marginal surface M shown by the dotted line is formed so as to be smoothly widened toward the both sides in order to make the sphere and the area continuous to avoid a sudden change of the surface refracting power.

It is preferable that, in use, the segment 2 is arranged at an inclination angle θ, for example, generally, about 10°, with respect to a vertical direction as shown in Fig. 1, to adjust the direction of movement of eyes from far vision to near vision. At the same time, it is preferable that an upper boundary line 11 of the segment 2is shaped like a gentle circular arc substantially perpendicular to the progressive direction for the double purpose of unhindering horizontal visual field and making the segment symmetrical. It is necessary that the radius of curvature of the circular arc is established to be larger than the diameter of the segment. When, for example, the diameter of the segment is 30 mm, the most preferred radius of curvature of the circular arc is 45 mm, that is, 1.5 times the diameter of the segment.

In Figs. 1 and 2, in an optical design in which only the movement of eyes between the far vision sphere F and the near vision sphere N is considered, the upper boundry line 11 of the segment 2 becomes a straight line perpendicular to the progressive curve S. With respect to external appearance in use, however, it is preferable that the upper boundary line is shaped like a gentle circular arc. Accordingly, the upper edge portion of the segment 2 is optically designed to have uniform surface refracting power along the gentle circular arc from the progressive curve to the opposite sides.

The appearance is elegant if a side boundary line 12 of the segment is made to be a circular arc of the same curvature, but this shape is not limitive. At a point of contact between the circular arc of the segment upper boundary line 11 and the circular arc of the segment side boundary line 12, a segment shoulder boundary line 13 is made so as to be rounded off with a radius of curvature R to facilitate the production of the segment.

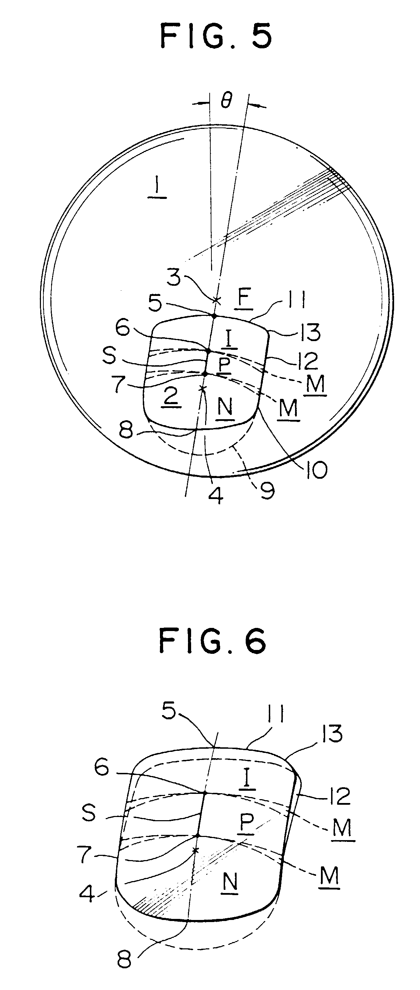

Embodiment B will be described with reference to Figs. 5 and 6. A main lens 1 is made to be a far vision sphere F containing an optical center 3 of far vision. The clearly sectioned upper portion of a segment 2 is made to be an intermediate vision refracting power sphere I used frequently in an individual life, so that a stable visual field is provided therein. The lower portion of the segment is made to be a near vision refracting power sphere N in which a sphere shape center 4 of near vision exists. An area between the two spheres is made to be as a low-astigmatism progressive refracting power area P for progressing from the surface refracting power of the intermediate vision sphere to the surface refracting power of the near vision sphere along a progressive curve S which leads from a lower edge center 6 of the intermediate vision sphere I to an upper edge center 7 of the near vision sphere N.

Smooth marginal surfaces M shown by the dotted line are configured so as to be smoothly widened toward opposite sides in order to make the three spherical areas continuous while avoiding a sudden change in surface refracting power.

It is preferable that, in use, the segment is inclined by an angle θ, for example, generally, about 10°, with respect to a vertical direction as shown in Fig. 5, to adjust the direction of movement of eyes from far vision to near vision. At the same time, it is preferable that the upper boundary line 11 of the segment 2 is shaped like a horizontally gentle circular arc for the purpose of unhindering the horizontal visual field in far vision and intermediate vision. It is necessary that the radius of curvature of the circular arc is established to be larger than the diameter of the segment. When, for example, the diameter of the segment is 30 mm, the most preferred radius of curvature of the circular arc is 45 mm, that is, 1.5 times the diameter of the segment.

The appearance is elegant if a side boundary line 12 of the segment 2 is made to be a straight line in parallel to the progressive direction, but this shape thereof is not limited. At a point of contact between the circular arc of the segment upper boundary line 11 and the straight line of the segment side boundary line 12, formed is a segment shoulder boundary line 13 which is rounded off with a radius of curvature R for facilitating the production of the segment. It is preferable that the lower portion of the segment is formed of a horizontally gentle circular arc, not a semicircle 9 shown by the dotted line, in the same manner as that of the upper portion thereof, whereby an advantage arises in that the height of the segment and the thickness of the prism segment can be reduced. This embodiment is useful in the case where a stable unifocal area of intermediate vision is required because of necessity of fixing eyes on one position in business. In the case where addition is large, the addition changes as a result of slight movement of eyes so that focal instability cannot be avoided. A good continuous visual field can be obtained easily, however, if the degree of addition is limited within a range from intermediate vision to near vision. Accordingly, this embodiment is useful particularly in the latter case.

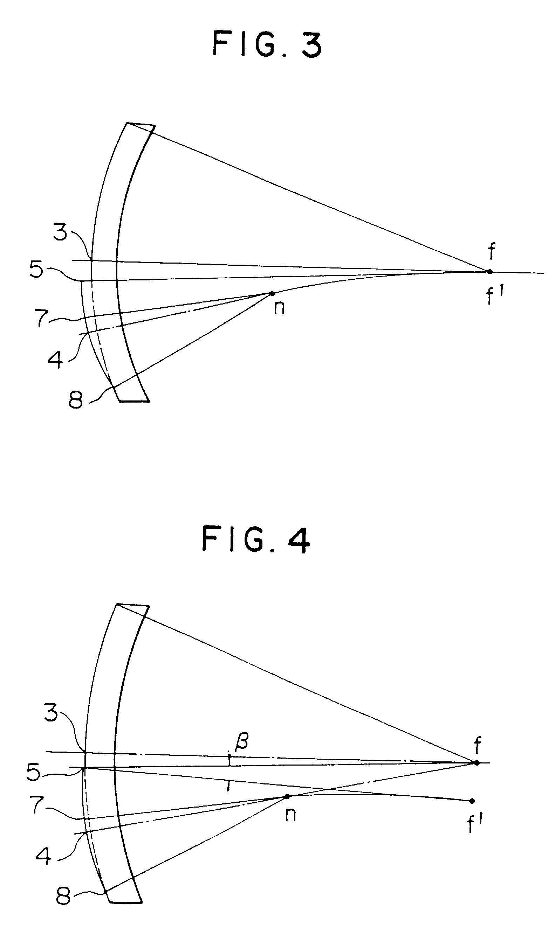

A lens in which the jump at an upper edge portion of the segment is minimized according to the present invention will be described. In Fig. 3, the image jump at the segment upper edge portion is minimized when a prism is given to the segment to provide coincidence (to make an angle β, while will be described later, zero) between a line connecting the far vision curvature center $\underline{f}$ of the main lens and the segment upper edge center 5 and a line connecting the segment upper edge center 5 and the far vision curvature center $\underline{f'}$ of the segment.

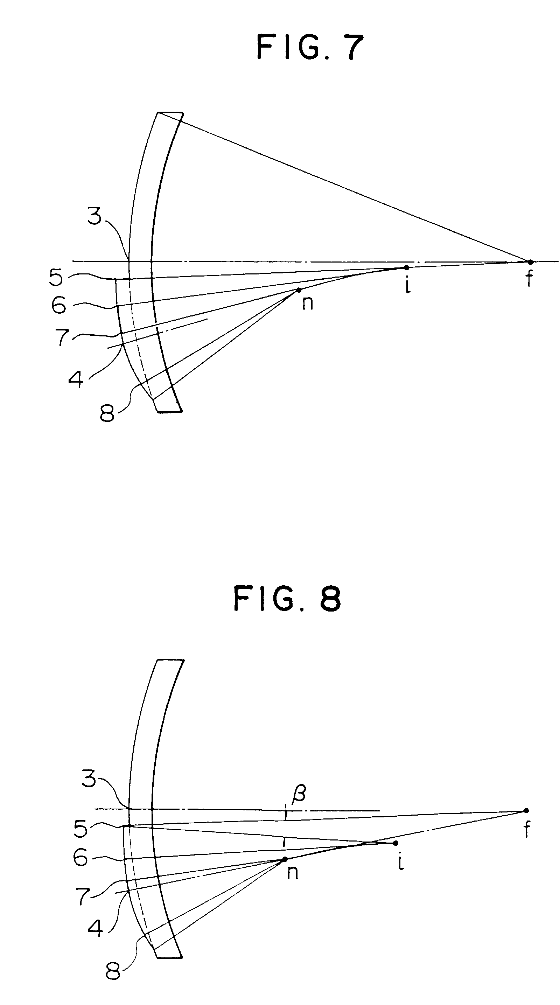

Similarly, in Fig. 7, the image jump at the segment upper edge portion is minimized when a prism is given to the segment to provide coincidence (to make an angle β, which will be described later, zero) between the direction of line connecting the far vision curvature center $\underline{f}$ of the main lens and the segment upper edge center 5 and the direction of line connecting the segment upper edge center 5 and the intermediate vision curvature center $\underline{i}$ of the segment.

A lens in which the level difference in the segment is minimized according to the present invention will be described. The appearance in use of spectacles becomes good when the level difference in the segment is minimized. In Figs. 4 and 8, a near vision curvature center $\underline{n}$ of the segment is on a straight line connecting the sphere shape center 4 of near vision and the far vision curvature center $\underline{f}$ of the main lens, when the level difference of the boundary line 10 in the near vision sphere in Fig. 2 becomes zero.

In this case, an angle β is formed between a line connecting the far vision curvature center $\underline{f}$ of the main lens and the segment upper edge center 5 and a line connecting the segment upper edge center 5 and the far vision curvature center $\underline{f'}$ of the segment, so that a jump occurs in the segment upper boundary line correspondingly.

Similarly, in Fig. 8, an angle β is formed between a line connecting the far vision curvature center $\underline{f}$ of the main lens and the segment upper edge center 5 and a line connecting the segment upper edge center 5 and the intermediate vision curvature center $\underline{i}$ of the segment, so that a jump occurs in the segment upper boundary line correspondingly.

An example in which the present invention is realized by equalizing the left and right prisms of near vision will be described. A series of segments in which upper and lower prisms are attached according to the present invention in advance are produced stepwise at intervals of a value such as 0.5 Δ (prism diopter).

From a prescription, the difference between left and right near vision prisms can be calculated by the formula

$$P = D \cdot d/10$$

in which P is the refracting power difference (Δ) between left and right near vision prisms, D is the peak refracting power difference (D) between left and right far visual points, and $\underline{d}$ is the distance (mm) from a far visual point to a near visual point.

When, for example, a prescription R. S+0.75, L. S+1.50, left and right addition 1.50 and distance d = 18 between far and near visual points are given, the peak refracting power difference D between left and right far visual points and the difference P between left and right prisms satisfy the equations D = 0.75 and P = 0.75 x 18/10 = 1.35 $\Delta$. Because the values in the prescription are positive, the base up + difference exists in the left lens. Accordingly, a 1.0 $\Delta$ base up or 1.5 $\Delta$ base up prism segment can be selected as a partner right lens. Or a 1.4 $\Delta$ base up segment for minimizing the jump can be selected to make equilibrium. In this case, a "no jump" effect can be obtained at the same time.

When, as another example, a prescription R. S-0.50, L. S-1.00, left and right addition 1.50 and a distance d = 18 between far and near visual points are given, the peak refracting power difference D between left and right far visual points and the difference P between left and right prisms satisfy the equations D = 0.50 and P = 0.50 x 18/10 = 0.9 $\Delta$. Because the values in the prescription are negative, the base down + difference exists in the left lens. Accordingly, when a 1.0 $\Delta$ base up prism segment is selected as the left lens to make equilibrium to cancel the difference, an effect for reducing the jump can be obtained at the same time. In the cases of Embodiments 2 and 3, prism equilibrium can be calculated at the middle portion of the segment in the same manner as described above.

When the lens as shown in Figs. 5 through 8 according to the present invention is formed from a glass material by polishing so that the segment is projected, producing cost increases greatly. Moulding by using a plastic material is rather advantageous in that a great deal of copies can be produced. An embodiment in which such moulding is used will be described.

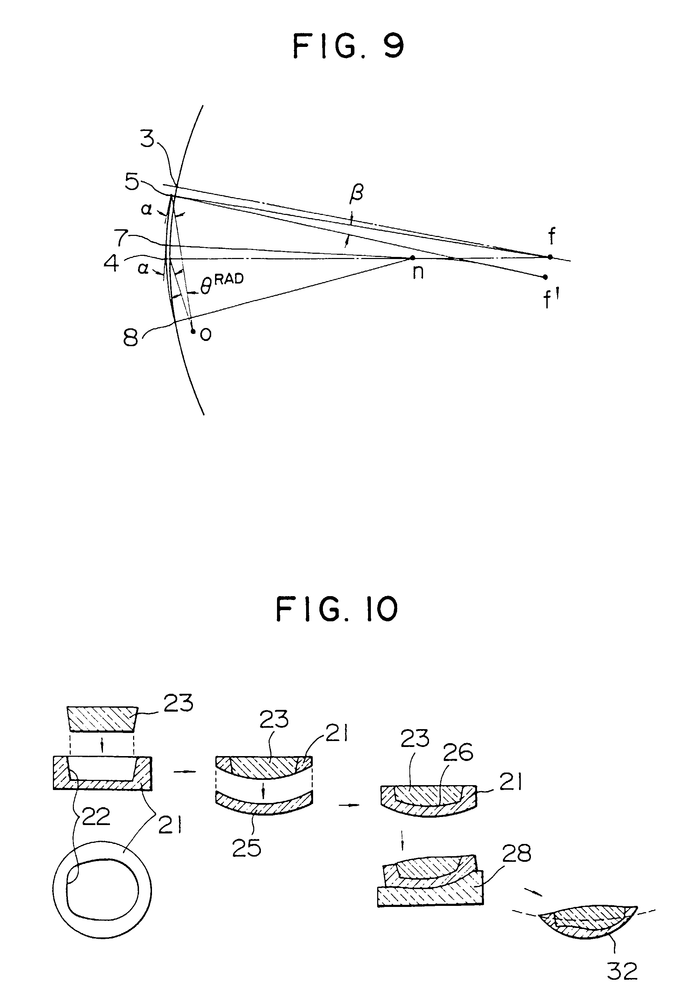

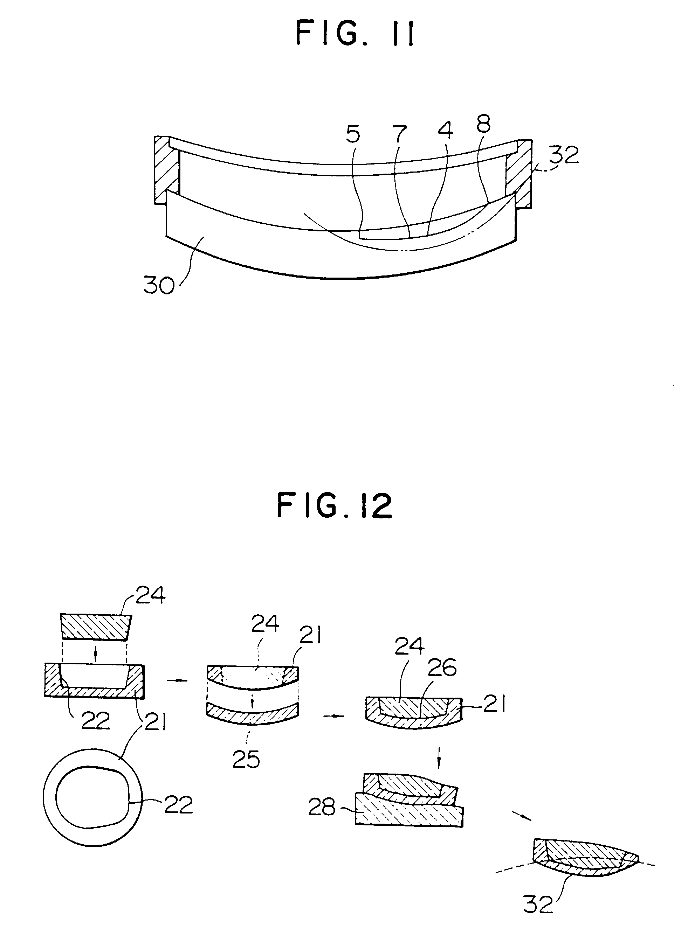

Fig. 11 shows an example of a plastic lens cast mould 30. In general, a multifocal lens has a segment at the convex. Moulding of such a lens requires producing the progressive focal segment according to the present invention in the concave of the mould. This requirement can be realized only by a quite novel producing method. As shown in Fig. 10, a concave 22 having a segment profile is formed in a segment profile carrier 21, and an etching glass segment 23 is embedded in the concave 22 and fused together with a thin segment carrier 25 at an optical sphere 26, in advance. Then, a progressive refracting power surface is produced in a fusion surface between the two by a known method to soften/deform glass by using a heat-resisting former 28 formed into an accurate cubic surface. The surface thus produced is formed and polished again into a segment. Then, the segment is fused again on the mould 30 at a fusion sphere 32 as shown by the two-dotted chain line in Fig. 11, by a known method of fusing a main lens and a segment. The segment profile carrier 21, the segment carrier 25 and the main lens material are homogeneous, and therefore they are united into one body after fused so that the fusion surfaces disappear. Then, after a far vision refracting power sphere is formed and polished on the whole surface, the segment portion made of etching glass is removed to thereby produce a concave which becomes a progressive segment according to the present invention is formed. In this case, for making the aforementioned prism segment, a high refractive index glass segment must be located in a fusion sphere position to give a correct prism. A plastic lens having a projected segment is cast by use of this mould by a conventionally known method. Alternatively, the above may be realized through injection moulding, plastic moulding, etc.

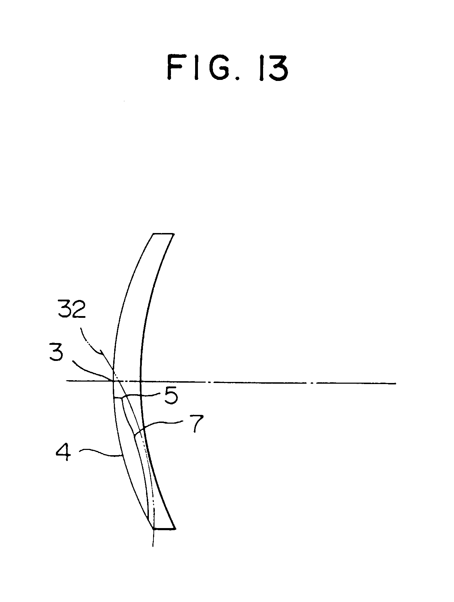

An example in which the present invention is applied to a conventional fusion segment will be described. This can be realized only by a quite novel producing method. As shown in Fig. 12, a concave 22 having a segment profile is formed in a segment profile carrier 21, and a high index glass segment 24 is embedded in the concave 22 and fused together with a thin segment carrier 25 at an optical sphere 26, in advance. Then, a progressive refracting power surface is produced in a fusion surface between the two by a known method to soften/deform glass by using a heat-resisting former 28 formed into an accurate cubic surface. The surface thus produced is formed and polished again into a segment. Then, the segment is fused again on a main lens material at a fusion sphere 32 as shown by the two-dotted chain line in Fig. 13, by a known method of fusing a main lens and a segment. The segment profile carrier 21, the segment carrier 25 and the main lens material are homogeneous, and therefore they are united into one body after fused so that the fusion surfaces disappear. Then, a far vision refracting power sphere is formed and polished on the whole surface to thereby produce a fusion segment according to the present invention. In this case, for obtaining the aforementioned prism segment, a high refractive index glass segment must be located in a fusion sphere position to give a correct prism. As described above, the progressive focal area and the prism thereof can be incorporated in the lens. Accordingly, the lens is useful and good in appearance because the outside surface of the lens is so smooth as to prevent deposition of stains.

An example in which the present invention is applied to a stuck segment will be described. A segment as shown in Fig 6 is formed of an optically transparency material, separately. By sticking the segment to a main lens with an optical adhesive agent, the segment can be provided to be projected. If a material such as plastics having slight flexibility is used, the material can be used in a sphere of a slightly different curvature or a toric surface in a unifocal lens so that the invention can be applied to spectacles which is being used. This is a novel feature in that the lens according to the invention can be economically used as a conventional multifocal lens. This example is very useful in the case where the lens economically prepared according to the present invention is used by way of experiment to understand the effect of the invention.

The feature in which a logarithmic spiral is used as a progressive curve S according to the present invention will be described. The progressive curve is not limited to the logarithmic spiral, and any may be used as the progressive curve. As the results of various investigations, however, it has been found that the use of a logarithmic spiral is suitable to the degree of geometric progress and the rate of increase of refracting power corresponding to the movement of eyes from far vision to near vision, and that the use of a logarithmic spiral is suitable also for selection of a logarithmic spiral of necessary progressive power from the length of the progressive focal area and the radii of curvature before and after the progressive focal area and for obtaining a progressive prism angle to calculate an image jump angle $\beta$ as described above.

In Fig. 9, the progressive curve from 5 to 7 is a logarithmic spiral with 0 as a pole, which is represented by the following formula.

$$r = r_0 e^{\theta \cot \alpha}$$

in which:

Progressive curve length: 1
Radius of curvature of far vision refracting power sphere: $R_1$
Radius of curvature of near vision refracting power sphere: $R_2$
Equal angle of logarithmic spiral: $\alpha = \tan^{-1}\ell/R_1\text{-}R_n$
Radius vector of logarithmic spiral from 0 to 5: $r_f = R_f \sin \alpha$
Radius vector of logarithmic spiral from 0 to 7: $r_n = R_n \sin \alpha$
Radius vector angle (Rad) of logarithmic spiral: $\theta = \log k \cdot R_f/R_n$
Constant of logarithmic spiral: $k = e^{2\pi\cot\alpha}$

The angle $\beta$ between the direction of line from 5 to $\underline{f}$ and the direction of line from 5 to $\underline{f}'$ can be calculated by using the above equations in the case where the diameter of the segment in the far vision sphere and the length of the progressive curve in Embodiment 1 are 30 mm and 12 mm, respectively. The results are shown as follows.

| Name | Addition | $R_f$ | $R_n$ | $\alpha$ | $\beta$ |
|---|---|---|---|---|---|
| 6.00 + | 1.00Add | 92.00 | 77.679 | 39.961 | 0.953 |
| 6.00 + | 1.50Add | 92.00 | 72.069 | 31.051 | 1.424 |
| 6.00 + | 2.00Add | 92.00 | 67.215 | 25.835 | 1.881 |
| 6.00 + | 2.50Add | 92.00 | 62.974 | 22.461 | 2.325 |
| 6.00 + | 3.00Add | 92.00 | 59.236 | 20.116 | 2.757 |

The present invention is useful with the following effects.

a. There is an effect in that a harmful portion can be removed by using only a low-astigmatism portion in the vicinity of the progressive curve while limiting the progressive focal area within the segment. In particular, the invention is useful in spectacles having a high degree of addition.

b. There is an effect in that a stable wide visual field can be obtained without distortion such as falling of vertical line and inclination of horizontal level in a side visual field and without any defect of swinging feeling of the lateral movement of the visual point. In particular, the invention is useful in spectacles for a person seeing erection or inclination of a target in a visual field.

c. There is an effect in that the progressive focal area can be designed freely to obtain a large degree of progress in a short progressive distance or to obtain smoothness by avoiding a sudden image change when the visual point is shifted from a unifocal area to the progressive focal area.

d. There is an effect in that a visual field of clear vision non-stepwise and corresponding to a wide range of visual distance can be obtained in the segment. In particular, the invention is useful in spectacles having a high degree of addition.

e. There is an effect in that no jump occurs in the upper portion of the segment. In particular, the invention is useful in spectacles for a person moving his eyes between far vision and near vision frequently.

f. There is an effect in that an optimum segment according to a prescription can be selected easily from a series of prism segments prepared stepwise as half-finished articles in advance to equilibrate left and right prisms in the vertical direction of near vision with low cost without special order such as slab-off. In particular, the invention is useful in spectacles for a person having a large difference in addition between his left and right eyes.

g. There is an effect in that the prism thickness of a convex lens required for progression or slab-off can be reduced to lighten the weight of the lens remarkably. In particular, the invention is useful in spectacles for a person having a large difference in addition between his left and right eyes.

h. There is an effect in that an optimum segment according to a prescription can be selected easily from a series of prism segments prepared stepwise as half-finished articles in advance to give a synthetic optical center to the near vision sphere. In particular, the invention is useful in spectacles in the case where the near vision sphere is used for a long time or in the case where finger work is carried out.

As described above in detail, not only there is an advantage that a progressive focal area is provided in a segment of a multifocal lens, but there are a large number of effects produced generally and geometrically, so that there is utility in that a lens suitable to the user's fashion of use of the multifocal lens and the optical character thereof can be selected and provided easily and freely, and the comfortableness which has been never obtained in use of spectacles.

## Claims

1. A multifocal lens having a main unifocal portion (F) and a clearly sectioned segment (2) for additional surface refracting power, wherein

   the segment has a unifocal area (N) and a low-astigmatism progressive focal area (P), which areas are continuous to avoid a sudden image change, progressive focus is provided only in said progressive focal area of said segment,
   a main lens (1) forms said main unifocal portion (F) which is of far vision power, a lower portion of the segment (2) forms said unifocal area (N) which is of near vision power, and a second portion of said segment (2) above said lower portion forms said progressive focal area (P),

   characterised in that an upper portion of said segment (2) above said second portion forms a second unifocal area of said segment (2) which is of intermediate vision power (I), and

   refracting power in said progressive focal area progresses from intermediate vision refracting power to near vision refracting power.

2. A multifocal lens according to claim 1, wherein said segment (2) has an upper boundary line (11) forming a circular arc with a radius of curvature not smaller than the diameter of said segment (2).

3. A multifocal lens according to either one of claims 1 or 2, in which said segment (2) is arranged such that there is coincidence between the direction towards the focal point of an upper edge portion of said segment (2) and a direction towards the focal point of an adjacent portion of said main lens adjacent to said segment (2), so that, when the line of sight moves from the main unifocal portion (F) to the segment (2) across the upper boundary line (11), the image jump is minimized.

4. A multifocal lens according to either one of claims 1 or 2, in which the thickness of the segment (2) at the unifocal portion of near vision power is minimized to make the boundary line imperceptible.

5. A multifocal lens according to any one of the preceding claims, in which a logarithmic spiral is used as a progressive curve (S).

6. A multifocal lens according to any one of the preceding claims, in which said segment and said main lens are made as one body from an optically transparent material, said segment projecting from said main lens.

7. A multifocal lens according to any one of claims 1 to 5, in which said segment is formed by embedding an optical transparent material in said main lens, said optical transparent material having a refractive index higher than said main lens, a progressive focal refractive surface being formed at a fusing interface of said main lens and said segment.

8. A multifocal lens according to any one of claims 1 to 5, in which said segment is formed of an optical transparent material separately from said main lens and then stuck to said main lens so as to project from said main lens.

9.  A plurality of segments, the prismatic power of which varies stepwise through the plurality, for selective attachment to a unifocal lens, each segment being arranged such that by attaching a selected one to a unifocal lens there is provided a multifocal lens having a main unifocal portion (F) which is of far vision power and a clearly sectioned segment (2) for additional surface refracting power, wherein

each segment has unifocal area (N) and a low-astigmatism progressive focal area (P), which areas are continuous to avoid a sudden image change, progressive focus is provided only in said progressive focal area of said segment,

a lower portion of the segment (2) forms said unifocal area (N) which is of near vision power, and a second portion of said segment (2) above said lower portion forms said progressive focal area (P),

an upper portion of said segment (2) above said second portion forms a second unifocal area of said segment (2) which is of intermediate vision power (I), and

refracting power in said progressive focal area progresses from intermediate vision refracting power to near vision refracting power.

## Patentansprüche

1.  Multifokale Linse mit einem Haupt-Unifokalabschnitt (F) und einem eindeutig abgegrenzten Segment (2) für zusätzliche Flächenbrechkraft, wobei

das Segment einen Unifokalbereich (N) und einen niedrigastigmatischen progressiven Fokalbereich (P) aufweist, welche Bereiche zur Vermeidung einer plötzlichen Bildänderung ineinander übergehen, wobei ein progressiver Fokus bzw. Brennpunkt nur im progressiven Fokalbereich des Segments gewährleistet ist,

eine Hauptlinse (1) den Haupt-Unifokalabschnitt (F) mit Fernsichtstärke bildet, ein unterer Abschnitt des Segments (2) den Unifokalbereich (N) mit Nahsichtstärke bildet und ein zweiter Abschnitt des Segments (2) über dem unteren Abschnitt den progressiven Fokalbereich (P) bildet,

dadurch gekennzeichnet, daß ein oberer Abschnitt des Segments (2) über dem zweiten Abschnitt einen zweiten Unifokalbereich des Segments (2) mit einer mittleren Sehstärke bildet (I) und

die Brechkraft im progressiven Fokalbereich von einer mittleren Sehbrechkraft auf eine Nahsichtbrechkraft übergeht.

2.  Multifokale Linse nach Anspruch 1, wobei das Segment (2) eine obere Grenzlinie (11) aufweist, die einen Kreisbogen mit einem Krümmungsradius, der nicht kleiner ist als der Durchmesser des Segments (2), bildet.

3.  Multifokale Linse nach einem der Ansprüche 1 oder 2, wobei das Segment (2) so angeordnet ist, daß Koinzidenz bzw. Übereinstimmung besteht zwischen der Richtung zum Brennpunkt eines Oberkantenabschnitts des Segments (2) und einer Richtung zum Brennpunkt eines angrenzenden, dem Segment (2) benachbarten Abschnitts der Hauptlinse, so daß dann, wenn sich die Sicht- oder Sehlinie vom Haupt-Unifokalabschnitt (F) zum Segment (2) über die obere Grenzlinie (11) verschiebt, der Bildsprung minimiert ist.

4.  Multifokale Linse nach einem der Ansprüche 1 oder 2, wobei die Dicke des Segments (2) am Unifokalabschnitt der Nahsichtstärke minimiert ist, so daß die Grenzlinie nicht wahrnehmbar ist.

5.  Multifokale Linse nach einem der vorangehenden Ansprüche, wobei eine logarithmische Spirale als eine progressive Kurve (S) verwendet wird.

6.  Multifokale Linse nach einem der vorangehenden Ansprüche, wobei das Segment und die Hauptlinse als ein Körper aus einem optisch transparenten Werkstoff geformt sind und das Segment von der Hauptlinse vorspringt.

7.  Multifokale Linse nach einem der Ansprüche 1 bis 5, wobei das Segment durch Einbetten eines optisch transparenten Werkstoffs in die Hauptlinse geformt ist, welcher optisch transparente Werkstoff einen höheren Brechungsindex als die Hauptlinse aufweist, wobei eine Brechfläche progressiver Brennweite an einer Verschmelzungsgrenzfläche von Hauptlinse und Segment geformt ist.

8.  Multifokale Linse nach einem der Ansprüche 1 bis 5, wobei das Segment aus einem optisch transparenten Werkstoff getrennt von der Hauptlinse geformt und dann an der Hauptlinse angeklebt ist, so daß es von der Hauptlinse vorspringt.

9. Eine Anzahl von Segmenten, deren prismatische Stärke durch die Anzahl hindurch stufenweise variiert, für selektive Anbringen an einer Unifokallinse, wobei jedes Segment so angeordnet ist, daß durch Anbringung eines ausgewählten Segments an einer Unifokallinse eine multifokale Linse mit einem Haupt-Unifokalschnitt (F), der eine Fernsichtstärke besitzt, und einem eindeutig abgegrenzten Segment (2) für zusätzliche Flächenbrechkraft bereitgestellt wird, wobei

jedes Segment einen Unifokalbereich (N) und einen niedrigastigmatischen progressiven Fokalbereich (P) aufweist, welche Bereiche zur Vermeidung einer plötzlichen Bildänderung ineinander übergehen, wobei ein progressiver Fokus bzw. Brennpunkt nur im progressiven Fokalbereich des Segments gewährleistet ist,
ein unterer Abschnitt des Segments (2) den Unifokalbereich (N) mit Nahsichtstärke und ein zweiter Abschnitt des Segments (2) über dem unteren Abschnitt den progressiven Fokalbereich (P) bilden,
ein oberer Abschnitt des Segments (2) über dem zweiten Abschnitt einen zweiten Unifokalbereich des Segments (2) mit einer mittleren Stärke (I) bildet und
die Brechkraft im progressiven Fokalbereich von einer mittleren Sehbrechkraft auf eine Nahsichtbrechkraft übergeht.

**Revendications**

1. Lentille multifocale pourvue d'une partie unifocale principale (F) et d'un segment clairement divisé (2) pour un pouvoir réfringent surfacique additionnel, dans laquelle

le segment comporte une zone unifocale (N) et une zone focale progressive à faible astigmatisme (P), lesquelles zones sont continues de manière à éviter une variation soudaine d'image, un foyer progressif n'étant établi que dans ladite zone focale progressive dudit segment,
une lentille principale (1) forme ladite partie unifocale principale (F) ayant un pouvoir de vision à grande distance, une partie inférieure du segment (2) forme ladite zone unifocale (N) ayant un pouvoir de vision à faible distance, et une seconde partie dudit segment (2), au-dessus de ladite partie inférieure, forme ladite zone focale progressive (P),

caractérisée en ce qu'une partie supérieure dudit segment (2), au-dessus de ladite seconde partie, forme une seconde zone unifocale dudit segment (2) ayant un pouvoir de vision à distance intermédiaire (I), et

le pouvoir réfringent de ladite zone focale progressive progresse entre le pouvoir réfringent de vision à distance intermédiaire et le pouvoir réfringent de vision à faible distance.

2. Lentille multifocale selon la revendication 1, dans laquelle ledit segment (2) comporte une ligne frontière supérieure (11) formant un arc circulaire dont le rayon de courbure n'est pas inférieur au diamètre dudit segment (2).

3. Lentille multifocale selon l'une quelconque des revendications 1 ou 2, dans laquelle ledit segment (2) est disposé de telle sorte que s'établit une coïncidence entre la direction menant au point focal d'une partie de bord supérieur dudit segment (2) et une direction menant au point focal d'une partie contigüe de ladite lentille principale contigüe audit segment (2), de sorte que, lorsque la ligne de collimation se déplace depuis la partie unifocale principale (F) jusqu'au segment (2) en traversant la ligne frontière supérieure (11), le saut d'image est minimisé.

4. Lentille multifocale selon l'une quelconque des revendications 1 ou 2, dans laquelle l'épaisseur du segment (2), au niveau de la partie unifocale ayant un pouvoir de vision à faible distance, est minimisée de façon à rendre imperceptible la ligne frontière.

5. Lentille multifocale selon l'une quelconque des revendications précédentes, dans laquelle une spirale logarithmique est adoptée en tant que courbe progressive (S).

6. Lentille multifocale selon l'une quelconque des revendications précédentes, dans laquelle ledit segment et ladite lentille principale sont fabriqués d'un seul tenant à partir d'un matériau optiquement transparent, ledit segment faisant saillie sur ladite lentille principale.

**7.** Lentille multifocale selon l'une quelconque des revendications 1 à 5, dans laquelle ledit segment est formé en insérant un matériau optiquement transparent dans ladite lentille principale, ledit matériau optiquement transparent ayant un indice de réfraction supérieur à celui de ladite lentille principale, une surface focale réfringente progressive étant formée au niveau d'une interface de fusion de ladite lentille principale et dudit segment.

**8.** Lentille multifocale selon l'une quelconque des revendications 1 à 5, dans laquelle ledit segment est formé à partir d'un matériau optiquement transparent, séparément de ladite lentille principale, puis est collé sur ladite lentille principale de façon à faire saillie sur ladite lentille principale.

**9.** Pluralité de segments, dont le pouvoir prismatique varie par palier le long de cette pluralité, pour une fixation sélective à une lentille unifocale, chaque segment étant disposé de telle sorte, qu'en fixant un segment sélectionné à une lentille unifocale, est réalisée une lentille multifocale pourvue d'une partie unifocale principale (F) ayant un pouvoir de vision à grande distance, et d'un segment clairement divisé (2) pour un pouvoir réfringent surfacique additionnel, dans laquelle :

chaque segment comporte une zone unifocale (N) et une zone focale progressive à faible astigmatisme (P), lesquelles zones sont continues de manière à éviter une variation soudaine d'image, un foyer progressif n'étant établi que dans ladite zone focale progressive dudit segment,
une partie inférieure du segment (2) forme ladite zone unifocale (N) ayant un pouvoir de vision à faible distance, et une seconde partie dudit segment (2), au-dessus de ladite partie inférieure, forme ladite zone focale progressive (P),
une partie supérieure dudit segment (2), au-dessus de ladite seconde partie, forme une seconde zone unifocale dudit segment (2) ayant un pouvoir de vision à distance intermédiaire (I), et
le pouvoir réfringent de ladite zone focale progressive progresse entre le pouvoir réfringent de vision à distance intermédiaire et le pouvoir réfringent de vision à faible distance.

# FIG. 1

# FIG. 2

# FIG. 3

# FIG. 4

# FIG. 5

# FIG. 6

# FIG. 7

# FIG. 8

# FIG. 9

# FIG. 10

# FIG. II

# FIG. 12

FIG. 13